# EUROPEAN PATENT APPLICATION

(11) **EP 1 870 142 A1**
(43) Date of publication of application: **26.12.2007**
(21) Application number: 06729228.4
(22) Date of filing: 16.03.2006
(51) Int. Cl.: A63F 13/12, A63F 13/10, G06T 13/00

(54) **GAME PROGRAM, GAME MACHINE, AND GAME METHOD**

(30) Priority: 23.03.2005 JP 2005083880
(71) Applicant: Konami Digital Entertainment Co., Ltd., Tokyo 107-8324 (JP)
(72) Inventor: MORIO, Manabu, Minato-ku, Tokyo 107-8324 (JP); ISAKA, Toshikazu, Minato-ku, Tokyo 107-8324 (JP); OKAMOTO, Ryuichiro, Minato-ku, Tokyo 107-8324 (JP)
(74) Representative: Driver, Virginia Rozanne
(86) International application number: PCT/JP2006/305231
(87) International publication number: WO 2006/101001

(57) **Abstract**

A game program wherein a game can be made to progress smoothly without being made any less enjoyable for the user. When a first event has occurred, a first character display process is performed (S57) based on first operation data, first non-operation data, and second non-operation data. This first character display process, which corresponds to first game control means, is a display process for displaying the batting action of a batter character 72 on a first display section 3a of a first terminal device 101. When the first event has not begun, a second character display process is performed (S64) based on first operation data, second operation data, first non-operation data, and second non-operation data. This second character display process, which corresponds to second game control means, is a display process for displaying the pitch-type setting action of a pitcher character 70 and the batting action of the batter character 72 on the first display section 3a of the first terminal device 101.

## Description

### TECHNICAL FIELD

The present invention relates to a game program, and particularly to a game program for running a competitive game on a computer via a network. The present invention also relates to a game device and game method that are run by this game program.

### BACKGROUND ART

Recently, the widespread use of the Internet and faster data transfer speeds in Internet connections have given rise to network games that use server devices connected via the Internet and multiple terminal devices used by multiple users. These types of network games include various communication-competition games, such as baseball, soccer, and combat sports, wherein multiple users can compete one-on-one via a server device (for example, see Patent Document 1).

In such communication-competition network games, a first terminal device used by a first user and a second terminal device used by a second user are connected to a server device via the Internet. Another known practice is to use a so-called P2P (Peer to Peer) network game in which a server device is not used, and data is directly exchanged between the first terminal device and the second terminal device. In a P2P network game, since there is no server device between the first terminal device and the second terminal device, no server device is overpopulated with numerous users, and communication can therefore take place reliably between the first terminal device and the second terminal device.

The first and second terminal devices used in such a P2P network game are, e.g., personal computers or home game consoles set up in the first and second users' homes. The first and second terminal devices each have a display section capable of displaying game characters, an operating section for operating the characters displayed on the display section, and a communication section connected to the Internet for exchanging game data with external sources. The first and second terminal devices are also each equipped with a game program for controlling the game in accordance with the operations of the operating section, for controlling the display of game characters on the display section, and for controlling communication involving the exchange of game data through communication with external sources. The communication sections of the first and second terminal devices communicate game data via the Internet, whereby the first and second users can communicate and compete with each other.

In this type of P2P network game, when, for example, the first user operates the operating section of the first terminal device, game data containing information pertaining to the operation of the operating section of the first terminal device is sent from the communication section of the first terminal device to the communication section of the second terminal device via the Internet. The second terminal device performs game control processing on the basis of the information pertaining to the operation of the operating section of the first terminal device, and the action of the game character corresponding to the operation of the operating section of the first terminal device, for example, is displayed on the display section of the second terminal device. Similarly, when the second user operates the operating section of the second terminal device, game data containing information pertaining to the operation of the operating section of the second terminal device is sent to the communication section of the first terminal device via the Internet, and the action of the game character corresponding to the operation of the operating section of the second terminal device is displayed on the display section of the first terminal device. The display sections of the first and second terminal devices are designed to always display the same screen in accordance with the operations of the operating sections of the first and second terminal devices.
Patent Document 1: Japanese Patent No. 3412693

### DISCLOSURE OF THE INVENTION

In a conventional P2P network game, the display sections of the first and second terminal devices are designed to always display the same screen in accordance with the operations of the operating sections of the first and second terminal devices. However, display processing is performed after operation data pertaining to the operations of both the operating section of the first terminal device and the operating section of the second terminal device is received in order to display the same screen on the display sections of the first and second terminal devices, and therefore a time lag of multiple frames may occur between the operations of the operating sections and the displays of the display sections. When there is a lag between the operations of the operating sections and the displays of the display sections, the operations of the users are not immediately reflected on the display sections, and therefore the users cannot be satisfied with the response of the game to their operations. In particular, the game may be inhibited from progressing smoothly in a competitive network game that requires immediacy.

In view of this, one possibility, for example, is to immediately show a display corresponding to the operation of the operating section of the first terminal device on the display section of the first terminal device, and to delay the display on the display section of the second terminal device by several frames, causing different screens to be displayed on the display sections of the first and second terminal devices. However, when different screens are displayed on the display sections of the first and second terminal devices, the character displayed on the first terminal device is not displayed on the display section of the second terminal device, for example, which may make the game significantly less enjoyable for the user.

An object of the present invention is to provide a game program wherein the game can progress smoothly without making the game any less enjoyable for the user.

The game program according to a first aspect is a game program that can run a game on a computer provided to a first terminal device that is used by a first user and is capable of communication and competition via a network with a second terminal device used by a second user, wherein characters displayed on the first terminal device are controlled by operating a first operating section provided to the first terminal device and a second operating section provided to the second terminal device. The game program runs the following functions on the computer.
(1) A first operation data receiving function for receiving first operation data pertaining to the operation of the first operating section.
(2) A first communication function for sending the first operation data to the second terminal device and for receiving second operation data pertaining to the operation of the second operating section.
(3) A second operation data receiving function for receiving the second operation data received by the first communication function.
(4) A first event-determining function for determining whether or not a specific event has occurred.
(5) A first game control function for performing various game control processes on the basis of the first operation data when the first event-determining function has determined that the specific event has occurred.
(6) A second game control function for performing various game control processes different from the first game control function on the basis of the first operation data and the second operation data when the first event-determining function has determined that the specific event has not occurred.
   In the game run by this program, the following processes are implemented in the first terminal device. First, first operation data pertaining to the operation of the first operating section is received. The first operation data is sent to the second terminal device, second operation data pertaining to the operation of the second operating section is transmitted, and the transmitted second operation data is received. A distinction is made as to whether or not a specific event has occurred, and when the first event-determining function has determined that the specific event has occurred, various game control processes are performed based on the first operation data. When the first event-determining function has determined that the specific event has not occurred, various game control processes different from the first game control function are performed based on the first operation data and the second operation data.
   In this game program, when the specific event has occurred, the first game control function performs various game control processes on the basis of the first operation data, and when the specific event has not occurred, various game control processes different from the first game control function are performed based on the first operation data and the second operation data. The various game control processes are, e.g., controls for performing various display processes on the first display section provided to the first terminal device. The specific event is, e.g., a state in which a character is capable of performing a specific action during the progress of the game.
   When the specific event has occurred, the operations of the first user are immediately reflected in the first display section because the display process is performed after only the first operation data has been received, unlike in conventional practice, wherein, for example, the display process is performed in the first display section after both the first operation data and the second operation data have been received. When the operations of the first user are immediately reflected in the first display section, the game can be made more exciting for the user with respect to his or her operations, and the game can be made to progress smoothly, particularly in a competitive network game that requires immediacy.
   When the specific event has not occurred, the display process can be performed on the first display section after, for example, both the first operation data and second operation data have been received. Therefore, the same display screen as the second display section provided to the second terminal device can be displayed, and the game is therefore no less enjoyable for the user.
   Thus, the process of either the first game control function or the second game control function is performed according to whether or not the specific event has occurred, whereby the game can be made to progress smoothly without becoming any less enjoyable for the user.
   The game program according to a second aspect is the game program according to the first aspect, wherein the first game control function and the second game control function are functions for performing various display processes in a first display section provided to the first terminal device. In this game program, when the specific event has occurred, the operations of the first user are immediately reflected in the first display section because the display process is performed after only the first operation data has been received by the first game control function, and the game can therefore be made more exciting for the user with respect to his or her operations. When the specific event has not occurred, the second game control function performs the display process in the first display section after both the first operation data and the second operation data have been received, whereby the first display section of the first terminal device can display the same display screen as the second display section of the second terminal device, and the game is therefore no less enjoyable for the user.
   The game program according to a third aspect is the game program according to the second aspect, wherein the first game control function is a function for performing a display process in which the first display section displays a display screen different from the display screen of a second display section provided to the second terminal device. The second game control function is a function for performing a display process in which the first display section displays the same display screen as the display screen of the second display section. In this game program, when a specific event has occurred, a display screen different from the second display section provided to the second terminal device is displayed, because the first game control function performs the display process after only the first operation data has been received. When the specific event has not occurred, the second game control function performs the display process in the in the first display section after both the first operation data and the second operation data have been received, whereby the same display screen as the second display section provided to the second terminal device is displayed. The first display section displays either a different display screen than the second display section or the same display screen as the second display section, depending on whether or not the specific event has occurred, whereby the game can be made to progress smoothly without making the game any less enjoyable for the user.
   The game program according to a fourth aspect is the game program according to any of the first through third aspects, and is a game program that can run a game on a computer provided to the first terminal device that is capable of communication and competition via a network with the second terminal device, wherein characters displayed on the first terminal device are controlled by operating the first operating section and the second operating section provided to the first terminal device and second terminal device, respectively. The game program can run this game with the further addition of the following functions.
(7) A first non-operation data receiving function for receiving first non-operation data that pertains to various game controls and does not include the first operation data.
(8) A second communication function for sending the first non-operation data to the second terminal device and for receiving second non-operation data that pertains to various game controls and does not include the second operation data.
(9) A second non-operation data receiving function for receiving the second non-operation data received by the second communication function.
(10) A third game control function for performing various game control processes identical to the various game control processes of the second terminal device, on the basis of the first non-operation data and the second non-operation data.

In the game run by this program, first non-operation data that pertains to various game controls and does not contain first operation data is received. The first non-operation data is sent to the second terminal device, second non-operation data that pertains to various game controls and does not include second operation data is transmitted, and the transmitted second non-operation data is received. Various game control processes that are identical to the various game control processes of the second terminal device are performed based on the first non-operation data and the second non-operation data.

In this game program, various game control processes that are identical to the various game control processes of the second terminal device are performed based on the first non-operation data and second non-operation data that do not include first operation data or second operation data, regardless of whether or not a specific event has occurred. The various game control processes are, e.g., control processes for performing various data calculation processes needed for the game to progress. Various game control processes that are identical to the various game control processes of the second terminal device are performed by the third game control function on the basis of the first non-operation data and the second non-operation data, even when, for example, the first game control function displays a different display screen on the first display section than on the second display section when the specific event has occurred. Therefore, there is no time lag in the various game control processes between the first terminal device and the second terminal device, and the second game control function can immediately display the same display screen on the first display section as on the second display section when, for example, the specific event has ended.

The game program according to a fifth aspect is the game program according to a fourth aspect, wherein the third game control function is a function for performing various game control processes that do not include the various display processes performed in the first display section. In this game program, the various game control processes are, e.g., control processes for performing various data calculation processes needed for the game to progress, and are also control processes that do not include the various display processes performed in the first display section by the first game control function and the second game control function. Since there is no time lag between the first terminal device and second terminal device in the various game control processes that do not include the various display processes, the second game control function can immediately display the same display screen on the first display section as on the second display section when, for example, the specific event has ended.

The game program according to a sixth aspect is the game program according to any of the first through fifth aspects, wherein the specific event begins when either the first operating section or the second operating section performs a specific operation. In this game program, the specific event can be designed to begin when, for example, a specific operation of the second operating section is performed.

The game program according to a seventh aspect is the game program according to any of the first through sixth aspects, wherein the specific event ends when either the first operating section or the second operating section performs a specific operation. In this game program, the specific event can be designed to end when, for example, a specific operation of the first operating section is performed.

The game program according to an eighth aspect is the game program according to any of the first through sixth aspects, wherein the specific event ends when a specific game time has elapsed when neither the first operating section nor the second operating section has performed a specific operation. In this game program, the specific event can be designed to end when a specific gap time set in advance has elapsed, even when neither the first operating section nor the second operating section has performed a specific operation.

The game device according to a ninth aspect is a game device which is provided to a first terminal device that is used by a first user and is capable of communication and competition via a network with a second terminal device used by a second user, and which can run a game wherein characters displayed on the first terminal device are controlled by operating a first operating section provided to the first terminal device and a second operating section provided to the second terminal device. The game device comprises first operation data receiving means, first communication means, second operation data receiving means, first event-determining means, first game control means, and second game control means.

In the first operation data receiving means, first operation data pertaining to the operation of the first operating section is received. In the first communication means, the first operation data is sent to the second terminal device, and second operation data pertaining to the operation of the second operating section is received. In the second operation data receiving means, the second operation data received by the first communication means is received. In the first event-determining means, a distinction is made as to whether or not a specific event has occurred. In the first game control means, various game control processes are performed based on the first operation data when the first event-determining means has determined that the specific event has occurred. In the second game control means, various game control processes different from the first game control means are performed based on the first operation data and the second operation data when the first event-determining means has determined that the specific event has not occurred.

The game method according to a tenth aspect is a game method that can run a game on a computer provided to a first terminal device that is used by a first user and is capable of communication and competition via a network with a second terminal device used by a second user, wherein characters displayed on the first terminal device are controlled by operating a first operating section provided to the first terminal device and a second operating section provided to the second terminal device. The game method comprises a first operation data receiving step, a first communication step, a second operation data receiving step, a first event-determining step, a first game control step, and a second game control step.

In the first operation data receiving step, first operation data pertaining to the operation of the first operating section is received. In the first communication step, the first operation data is sent to the second terminal device, and second operation data pertaining to the operation of the second operating section is received. In the second operation data receiving step, the second operation data received by the first communication step is received. In the first event-determining step, a distinction is made as to whether or not a specific event has occurred. In the first game control step, various game control processes are performed based on the first operation data when the first event-determining step has determined that the specific event has occurred. In the second game control step, various game control processes different from the first game control step are performed based on the first operation data and the second operation data when the first event-determining step has determined that the specific event has not occurred.

### BRIEF DESCRIPTION OF THE DRAWINGS

FIG. 1 is a block diagram showing a configuration of a network game system according to Embodiment 1 of the present invention;
FIG. 2 is a block diagram showing a configuration of a user terminal in the network game system;
FIG. 3 is a block diagram showing the function of the user terminal;
FIG. 4 is a diagram showing a display screen in the competition screen of the network game, wherein the pitcher character can set the type of pitch;
FIG. 5 is a diagram showing a display screen in which the batter character can perform a batting action when the pitcher character has performed a pitching action in the competition screen;
FIG. 6 is a diagram showing a display screen of a case in which the batter character has performed a batting action in the competition screen;
FIG. 7 is a diagram showing a display screen in which the ball moves across the field and a fielder character performs a fielding action in the general screen;
FIG. 8 is a diagram showing a display screen of a case in which a fielder character has performed a fielding action in the general screen;
FIG. 9 is a flowchart showing an overall game progression control process of the network game system;
FIG. 10 is a flowchart showing a display control process from the time the pitcher character performs a pitching action until the time a fielder character performs a fielding action;
FIG. 11 is a flowchart showing a first event-determining control process;
FIG. 12 is a flowchart showing a display control process based on data received by the first event-determining control process;
FIG. 13 is a diagram, equivalent to FIG. 11, of another embodiment; and
FIG. 14 is a diagram, equivalent to FIG. 12, of another embodiment.

### KEY

- 1a, 1b: First control section, second control section
- 2a, 2b: First storage section, second storage section
- 3a, 3b: First display section, second display section
- 4a, 4b: First audio output section, second audio output section
- 5a, 5b: First operating section, second operating section
- 6a, 6b: First communication section, second communication section
- 50: First operation data receiving means
- 51: Second operation data receiving means
- 52: First non-operation data receiving means
- 53: Second non-operation data receiving means
- 54: First communication means
- 55: Second communication means
- 56: First event determining means
- 57: First game control means
- 58: Second game control means
- 59: Third game control means
- 70: Pitcher character
- 72: Batter character
- 74: Ball object
- 100: Internet
- 101: First terminal device
- 102: Second terminal device

### BEST MODE FOR CARRYING OUT THE INVENTION

### [Configuration of network game system]

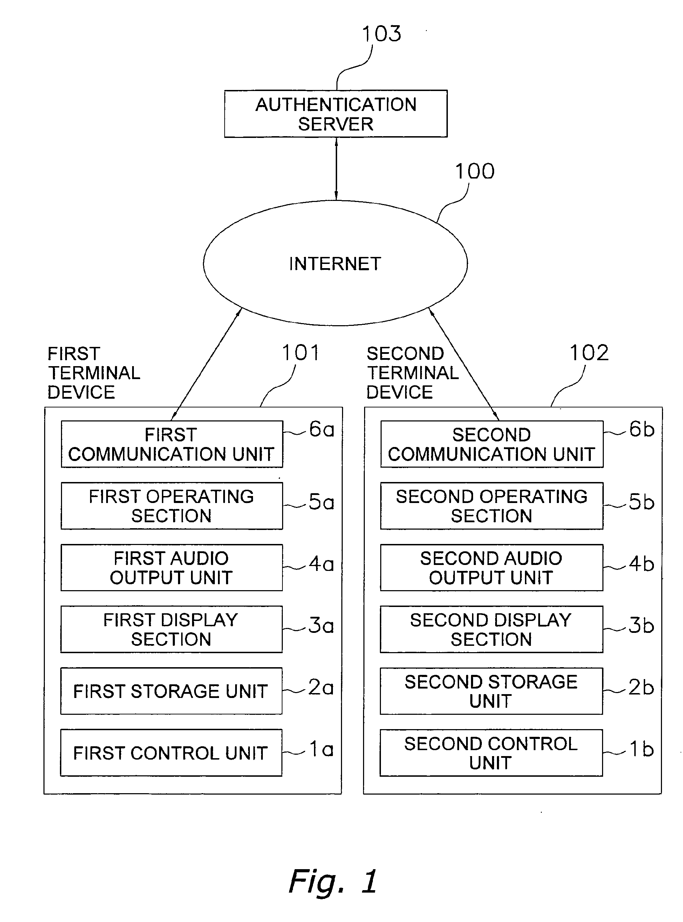

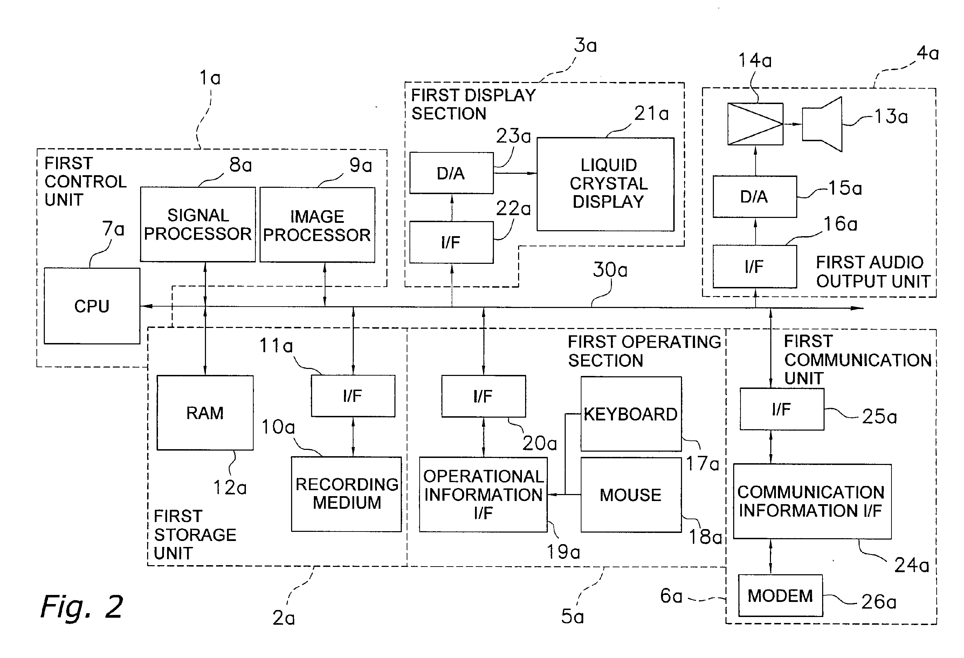

FIG. 1 is a block diagram showing a configuration of a network game system for connecting a first terminal device 101 as an example of a computer on which the game program according to the present invention can be used, a second terminal device 102 capable of communicating and competing with the first terminal device 101 via the Internet 100, and an authentication server 103 for authenticating the connection between the first terminal device 101 and the second terminal device 102 via the Internet 100. FIG. 2 is a block diagram showing a configuration as an example of the first terminal device 101.

The network game system shown in FIG. 1 comprises the first terminal device 101, the second terminal device 102, and the authentication server 103. The first terminal device 101, the second terminal device 102, and the authentication server 103 are connected so as to be capable of communicating with each other via the Internet 100.

The first terminal device 101 and second terminal device 102 are terminal devices used by users that are members, and the devices are personal computers that can run, e.g., a baseball game as a network game set up in the home of the user. The authentication server 103 is a server device for determining the competing users and for authenticating the users for member registration confirmation or billing or the like, in order for users that are members to use the first terminal device 101 and second terminal device 102 to run a baseball game played in game space. A game program for running network games is stored in the first terminal device 101 and the second terminal device 102, and so-called P2P (peer-to-peer) network games are played in which data is exchanged directly between the first terminal device 101 and the second terminal device 102. Therefore, the authentication server 103 does not store a game program for running network games, but primarily stores only an authentication program for authenticating the users. In addition to the first terminal device 101 and second terminal device 102, a plurality of terminal devices (not shown) used by a plurality of users is connected to the Internet 100, and the authentication server 103 determines competing players for two terminal devices at a time.

The first terminal device 101, the second terminal device 102, and the authentication server 103 send and receive a variety of information and other data between each other over the Internet 100 in accordance with, e.g., TCP/IP (Transmission Control Protocol/Internet Protocol). Particularly, a variety of information and other data is communicated between the P2P connected first terminal device 101 and second terminal device 102 in accordance with UDP (User Datagram Protocol), which is a communication system in transport layer of TCP/IP. UDP is a communication system that does not confirm successful transmission of data or correct errors; i.e., that merely sends data to a receiving terminal, and therefore has the characteristics of low data reliability but high transfer speeds. Therefore, UDP is often used in competitive network games wherein large amounts of data are communicated at high speeds between terminals. In cases in which the Internet 100 is used, the first terminal device 101 and second terminal device 102 are in many cases usually connected to a specific provider server via a modem or the like, and thus connected to the Internet 100 via the provider server, but illustrations and descriptions of the provider server are omitted in order to simplify the description.

The users who are using the first terminal device 101 and second terminal device 102 are members that have registered to receive specific service provided by the company managing the network game. These users communicate and compete with each other in a baseball game wherein, for example, a second user who uses the second terminal device 102 operates a pitcher character (equivalent to a pitcher in an actual baseball game) in the game space, while a first user who uses the first terminal device 101 operates a batter character (equivalent to a batter in an actual baseball game) in the same game space, whereby the batter character hits a ball object (equivalent to a ball in an actual baseball game) thrown by the pitcher character.

### [Configuration of network game device]

The first terminal device 101 is configured from a first control section 1a, a first storage section 2a, a first display section 3a, a first audio output section 4a, a first operating section 5a, and a first communication section 6a, and these sections are connected via a bus 30a, as shown in FIGS. 1 and 2. The bus 30a includes an address bus, a data bus, a control bus, and the like. The first control section 1a, the first storage section 2a, the first audio output section 4a, the first operating section 5a, and the first communication section 6a are contained within a personal computer, and the first display section 3a is contained within a display monitor connected to the exterior of the personal computer.

The first control section 1a is provided primarily to control the progress of the entire game on the basis of the game program. The first control section 1a is configured from a CPU 7a (Central Processing Unit), a signal processor 8a, and an image processor 9a, as shown in FIG. 2, for example. The CPU 7a, the signal processor 8a, and the image processor 9a are connected to each other via the bus 30a.

The CPU 7a analyzes commands from the game program, and processes and controls various data. For example, the CPU 7a commands the signal processor 8a to supply image data to the image processor. The signal processor 8a primarily performs computations in three-dimensional space, position-conversion computations from three-dimensional space to pseudo-three-dimensional space, light source computation processing, and image and audio data generation processing. The image processor 9a primarily performs a process for writing image data that will be drawn into RAM 12a on the basis of the computation results and processing results of the signal processor 8a.

The first storage section 2a is provided primarily to store program data, various data used by the game program, and other such data. The first storage section 2a is configured from a recording medium 10a, an interface circuit 11a, and RAM 12a (Random Access Memory), as shown in FIG. 2, for example. The interface circuit 11a is connected to the recording medium 10a. The interface circuit 11a and the RAM 12a are connected via the bus 30a.

The recording medium 10a is used to record program data for the operating system, image data, game data composed of audio data and various program data, and other such data. The recording medium 10a is, e.g., a hard disk drive installed in the personal computer, and program data for the operating system, game data, and other such data are stored in this recording medium. The recording medium 10a also contains a CD-ROM that can be read from a reading device installed in the personal computer, and this CD-ROM stores an initial program for installing game data and program data for the operating system. The hard disk drive is used to save various stopping-point game parameters when the game is stopped, which parameters are user-specific data.

The RAM 12a is used to temporarily store various data read from the recording medium 10a, and to temporarily record the processing results from the first control section 1a. The RAM 12a stores various data as well as address data indicating the stored positions of this data, and can read and write [the data] by specifying an arbitrary address.

The first display section 3a is provided primarily to output as images the image data written into the RAM 12a by the image processor 9a, the image data read from the recording medium 10a, and other such data. The first display section 3a is configured from a liquid crystal display 21a, an interface circuit 22a, and a D/A converter 23a (Digital-To-Analog converter), as shown in FIG. 2, for example. The D/A converter 23a is connected to the liquid crystal display 21a, and the interface circuit 22a is connected to the D/A converter 23a. The bus 30a is connected to the interface circuit 22a. Image data is supplied to the D/A converter 23a via the interface circuit 22a, where the image data is converted to analog image signals. The analog image signals are outputted as images to the liquid crystal display 21a. Another option is to not provide a D/A converter 23a and to have digital image signals outputted as images to the liquid crystal display 21a, or to output images to a CRT (cathode-ray tube) instead of a liquid crystal display.

The image data contains, e.g., polygon data, texture data, and the like. The term "polygon data" refers to coordinate data of the vertices constituting polygons. Texture data is used to set the textures of the polygons and is composed of texture-specifying data and texture color data. The texture-specifying data is data for matching polygons with textures, and the texture color data is data for setting the colors of the textures. Polygon address data and texture address data indicating the stored positions of the respective data are matched with the polygon data and the texture data. In this image data, the signal processor 8a converts the polygon data (three-dimensional polygon data) in three-dimensional space indicating the polygon address data into coordinates and perspective projections on the basis of movement amount data and rotational amount data for the screen itself (the viewpoint), and the signal processor then substitutes the resulting conversions with polygon data (two-dimensional polygon data) in two-dimensional space. The polygon forms are then configured from multiple pieces of two-dimensional polygon data, and texture data indicated by the texture address data is written into the internal areas of the polygons. Thus, objects having assigned textures, i.e., various characters can be shown in the polygons.

The first audio output section 4a is provided primarily to output audio data read from the recording medium 10 as audio. The first audio output section 4a is configured from a speaker 13a, an amplifier circuit 14a, a D/A converter 15a, and an interface circuit 16a, as shown in FIG. 2, for example. The amplifier circuit 14a is connected to the speaker 13a, the D/A converter 15a is connected to the amplifier circuit 14a, and the interface circuit 16a is connected to the D/A converter 15a. The bus 30a is connected to the interface circuit 16a. Audio data is supplied to the D/A converter 15a via the interface circuit 16a, where the audio data is converted into analog audio signals. The analog audio signals are amplified by the amplifier circuit 14a and are outputted as audio through the speaker 13a.

The first operating section 5a is primarily configured from a keyboard 17a, a mouse 18a, an operational information interface circuit 19a, and an interface circuit 20a, as shown in FIG. 2. The operational information interface circuit 19a is connected to the keyboard 17a and the mouse 18a, and the interface circuit 20a is connected to the operational information interface circuit 19a. The bus 30a is connected to the interface circuit 20a.

The keyboard 17a and mouse 18a are operating devices used by the player to input various operation commands, and operation signals corresponding to the operations of the player are sent to the CPU 7a. The operations of the keyboard 17a are used to send commands to the CPU 7a to move a character or cursor vertically and horizontally on the screen of the liquid crystal display 21a, in accordance with the operations of the vertical and horizontal directional keys, for example. Operating the S key on the keyboard 17a, for example, may send a command to the CPU 7a to cause the pitcher character to throw a pitch on the screen of the liquid crystal display 21a, or to cause the batter character to swing a bat on the screen of the liquid crystal display 21a. Operating the SPACE key, for example, may send a command to the CPU 7a to pause the game, or operating the ESC key, for example, may send a command to end the game. The operations of the keyboard 17a and of the mouse 18a (clicking and moving) can be switched, and operating the F11 key, for example, may send a command to the CPU 7a to switch between the operating the keyboard 17a and operating the mouse 18a.

The first communication section 6a is primarily configured from a communication information interface circuit 24a, an interface circuit 25a, and a modem 26a, as shown in FIG. 2. The communication information interface circuit 24a is connected to the modem 26a, and the interface circuit 25a is connected to the communication information interface circuit 24a. The bus 30a is connected to the interface circuit 25a.

The modem 26a is connected via an NIC (Network Interface Card) mounted in the interior or exterior of the personal computer, and is a device for connecting the personal computer to the Internet 100 via a specific provider server. The modem 26a is issued when connected to a specific provider server and can obtain a global IP address, which is a unique address in the Internet 100. This makes it possible to identify the user and to connect internally through the Internet 100. When UDP communication is established through the modem 26a, communication through a designated port (No. 12079, for example) must be permitted in a router or the like connected to the NIC. A connection with the Internet 100 is established through the modem 26a, making a P2P connection possible with the modem 26b of the second terminal device 102, described later.

The second terminal device 102 has the same configuration as the first terminal device 101, and is configured from a second control section 1b, a second storage section 2b, a second display section 3b, a second audio output section 4b, a second operating section 5b, and a second communication section 6b, as shown in FIG. 1. The configuration of the second control section 1b, the second storage section 2b, the second display section 3b, the second audio output section 4b, the second operating section 5b, and the second communication section 6b is the same as the configuration of the previously described first control section 1a, the first storage section 2a, the first display section 3a, the first audio output section 4a, the first operating section 5a, and the first communication section 6a, and a description thereof is therefore omitted. The diagram symbols b for the second terminal device 102 correspond to the diagram symbols a for the first terminal device 101, and the second terminal device 102 is provided, for example, with a modem 26b (not shown) that corresponds to the modem 26a of the first terminal device 101. A connection with the Internet 100 is established through the modem 26b, enabling a P2P connection with the modem 26a of the first terminal device 101.

The following is a description of a general outline of the network game device composed of the configuration described above.

When the network game application starts up in the first terminal device 101 used by the first user, the CPU 7a reads image data, audio data, and program data from the recording medium 10a on the basis of the operating system stored in the recording medium 10a. The read image data, audio data, and program data are partially or entirely stored in the RAM 12a. Operation information from the keyboard 17a and mouse 18a and various types of information from the second terminal device 102 obtained via the modem 26a are stored in the RAM 12a. The CPU 7a issues commands to the image data and audio data stored in the RAM 12a on the basis of the program data stored in the RAM 12a.

For image data, the signal processor 8a first calculates the position, light source and the like of the character in the three-dimensional space on the basis of the commands from the CPU 7a. The image processor 9a then performs a process for writing into the RAM 12a the image data to be drawn on the basis of the calculation results of the signal processor 8a. The image data written into the RAM 12a is then supplied to the D/A converter 23a via the interface circuit 22a. The image data is converted to analog video signals by the D/A converter 23a. The image data is supplied to the liquid crystal display 21a and displayed as an image.

For audio data, the signal processor 8a first creates and processes audio data on the basis of commands from the CPU 7a. Pitch conversion, noise addition, envelope settings, level settings, reverb addition, and other such processes, for example, are performed on the audio data. The audio data is then outputted from the signal processor 8a and is supplied to the D/A converter 15a via the interface circuit 16a. The audio data is converted to analog audio signals. The audio data is then outputted as audio through the speaker 13a via the amplifier circuit 14a.

The operation of the second terminal device 102 used by the second user is the same as the operation of the first terminal device 101 used by the first user and is therefore not described in detail.

### [Outline of various processes in network game device]

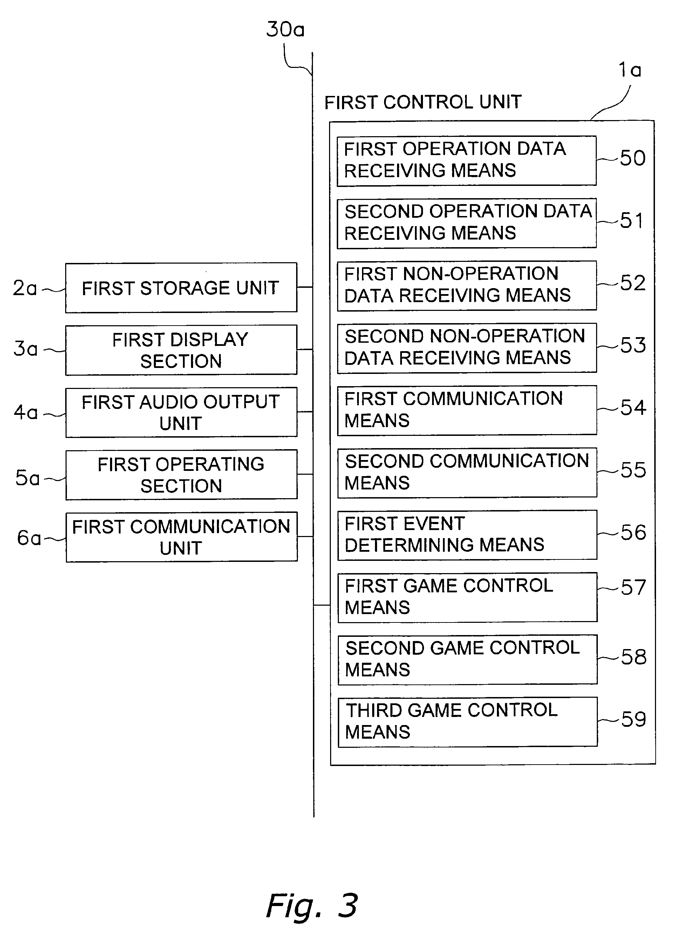

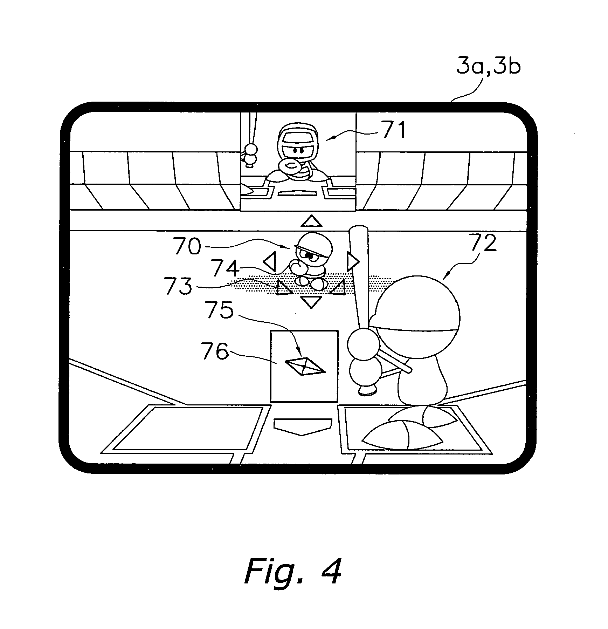

The network game run in the first terminal device 101 and second terminal device 102 of the present embodiment is a baseball game that allows communication and competition as previously described. The first terminal device 101 can run a game in which the first user controls the character displayed on the liquid crystal display 21a by operating the first operating section 5a. The second terminal device 102 can run a game in which the second user controls the character displayed on the liquid crystal display 21b by operating the second operating section 5b. It is possible to run a baseball game in which the second user, who is using the second terminal device 102, operates a pitcher character 70 (see FIGS. 4 through 8), and the first user, who is using the first terminal device 101, operates a batter character 72 (see FIGS. 4 through 8), whereby a ball object 74 (see FIGS. 4 through 8) thrown by the pitcher character 70 is hit by the batter character 72. FIG. 3 is a block diagram showing functions, and this diagram describes functions that fulfill important roles in the present invention.

In the first terminal device 101, the first control section 1a primarily comprises first operation data receiving means 50, second operation data receiving means 51, first non-operation data receiving means 52, second non-operation data receiving means 53, first communication means 54, second communication means 55, first event distinguishing means 56, first game control means 57, second game control means 58, and third game control means 59, as shown in FIG. 3.

The first operation data receiving means 50 is put into effect by a function for receiving first operation data pertaining to the operation of the first operating section 5a. The first operation data is batting information that enables the batter character 72 to perform a batting action as a result of the first user operating the first operating section 5a.

The second operation data receiving means 51 is put into effect by a function for receiving second operation data pertaining to the operation of the second operating section 5b. The second operation data is pitching information that enables the pitcher character 70 to perform a pitching action as a result of the second user operating the second operating section 5b.

The first non-operation data receiving means 52 is put into effect by a function for receiving first non-operation data that pertains to various game controls and that does not contain the first operation data pertaining to the operation of the first operating section 5a. The first non-operation data is control information for calculating various data needed for the game to progress, and this data excludes the batting information that causes the batter character 72 to bat as a result of the first user operating the first operating section 5a.

The second non-operation data receiving means 53 is put into effect by a function for receiving second non-operation data that pertains to various game controls and that does not contain the second operation data pertaining to the operation of the second operating section 5b. The second non-operation data is control information for calculating various data needed for the game to progress, and this data excludes the pitching information that causes the pitcher character 70 to pitch as a result of the second user operating the second operating section 5b.

The first communication means 54 is put into effect by a function for sending the first operation data pertaining to the first operating section 5a from the first communication unit 6a to the second communication unit 6b, and also for receiving the second operation data pertaining to the operation of the second operating section 5b from the second communication unit 6b to the first communication unit 6a.

The second communication means 55 is put into effect by a function for sending the first non-operation data that pertains to various game controls and does not include the first operation data from the first communication unit 6a to the second communication unit 6b, and also for receiving the second non-operation data that pertains to various game controls and does not contain the second operation data from the second communication unit 6b to the first communication unit 6a.

The first event determining means 56 is put into effect by a function for determining whether or not a specific event has occurred. This specific event begins from the receipt of pitching information that enables the pitcher character 70 to perform a pitching action as a result of the second user operating the second operating section 5b, and that ends at the receipt of batting information that enables the batter character 72 to perform a batting action as a result of the first user operating the first operating section 5a. Specifically, this specific event is a first event that occurs from the time the pitcher character 70 performs a pitching action until the time the batter character 72 performs a batting action.

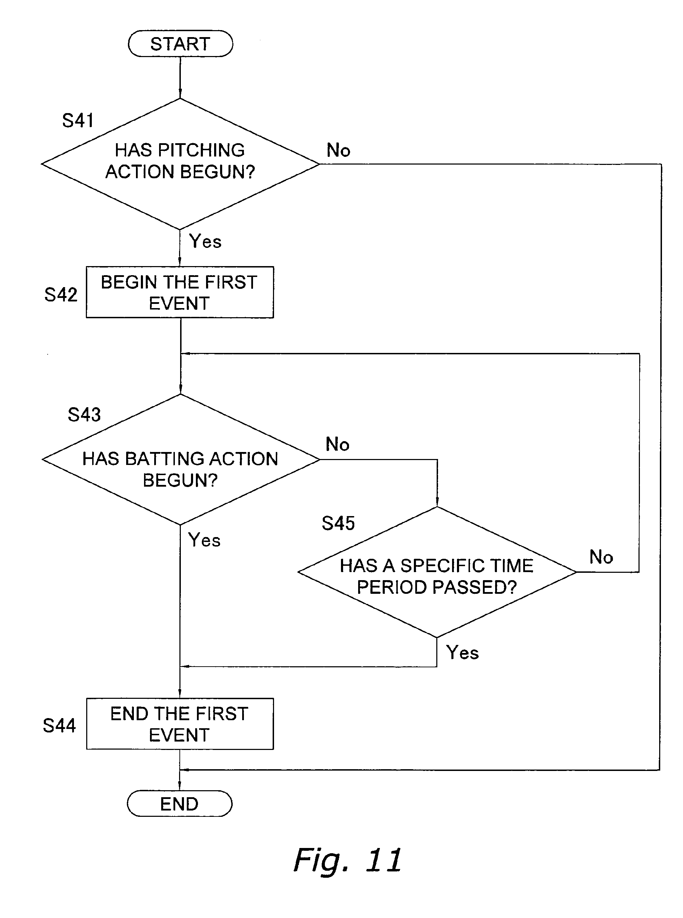

The control process in the first event determining means 56 is described using the flowchart in FIG. 11.

First, a determination is made as to whether or not the pitcher character 70 has begun the pitching action (S41). The determination of whether or not the pitcher character 70 has begun the pitching action determines that the pitcher character 70 has begun the pitching action upon the receipt of pitching information obtained as a result of the second user operating the second operating section 5b (S42). When pitching information obtained as a result of the second user operating the second operating section 5b is not received, it is determined that the pitcher character 70 has not begun the pitching action, and the first event is not begun.

When the first event begins, a determination is made as to whether or not the batter character 72 has begun the batting action (S43). The determination of whether or not the batter character 72 has begun the batting action determines that the batter character 72 has begun the batting action upon the receipt of batting information obtained as a result of the first user operating the first operating section 5a, and the first event ends (S44).

When batting information obtained as a result of the first user operating the first operating section 5a is not received, a determination is made as to whether or not a specific time period has passed (S45). When a specific time period has passed, i.e., when the batter character 72 has let the ball object 74 go by, a determination is made that the batter character 72 has ended the batting action, and the first event ends (S44). When a specific time period has not passed, another determination is made as to whether or not the batter character 72 has begun the batting action, and, last, the first event ends (S44). The process of determining whether or not the pitcher character 70 has begun the pitching action (S41) is then repeated.

The first game control means 57 is put into effect by a function for processing various displays on the first display section 3a on the basis of only the first operation data pertaining to the operation of the first operating section 5a, when the first event determining means 56 has determined that a specific event has occurred. Specifically, during the first event that occurs until the time the batter character 72 performs the batting action, the only information processed is batting information that enables the batter character 72 to perform a batting action as a result of the first user operating the first operating section 5a, whereby the actions of the ball object 74 and of the batter character 72 are displayed as an animation on the first display section 3a. When a signal from the first operating section 5a for moving the batter character 72 is recognized by, e.g., the CPU 7a of the first control unit 1a, batter image data corresponding to the batter character 72 is processed by, e.g., the signal processor 8a and image processor 9a of the first control unit 1a on the basis of instructions from the CPU 7a. The processed image data is supplied from the RAM 12a to the liquid crystal display 21a, and the swinging action of the batter character 72 is displayed as an animation on the liquid crystal display 21a.

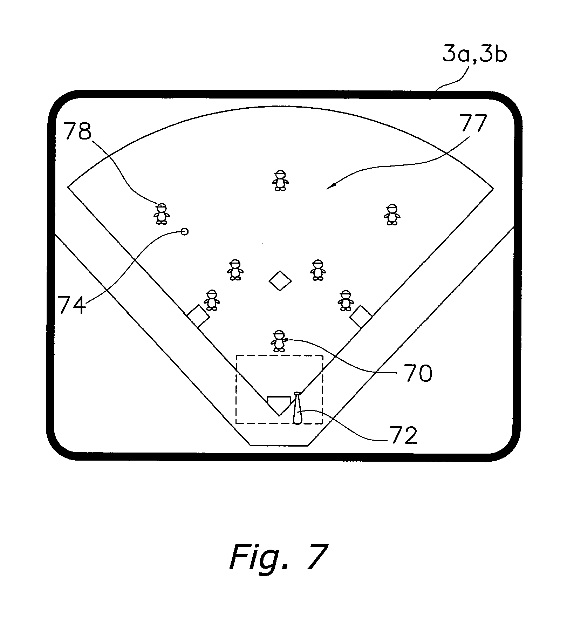

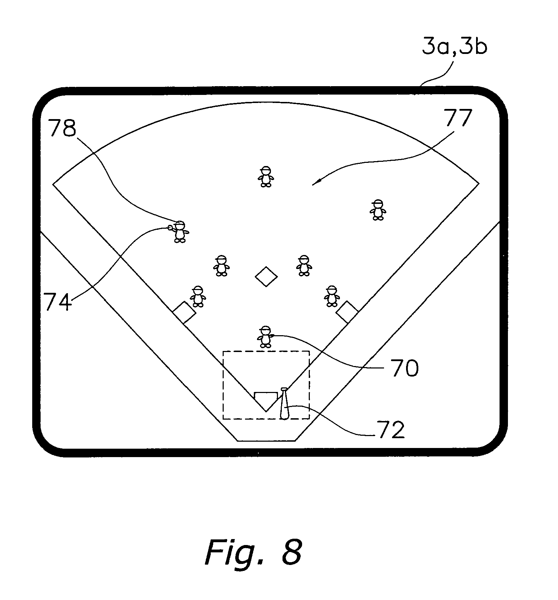

The second game control means 58 is put into effect by a function for processing various displays on the first display section 3a on the basis of the first operation data pertaining to the operation of the first operating section 5a and the second operation data pertaining to the operation of the second operating section 5b, when the first event determining means 56 has determined that the specific event has not occurred. Specifically, when the first event is not occurring before the pitcher character 70 performs the pitching action and after the batter character 72 has performed the batting action, and when, for example, a fielder character 78 (see FIGS. 7 and 8) performs a defense action, the two pieces of data are processed, including the first operation data obtained as a result of the first user operating the first operating section 5a and the second operation data obtained as a result of the second user operating the second operating section 5b. Images corresponding to these various processes are thereby displayed on the first display section 3a. When a signal from the second operating section 5b for moving the fielder character 78 is recognized by, e.g., the CPU 7a of the first control unit 1a via the first communication means 54, defender image data corresponding to the fielder character 78 is processed by, e.g., the signal processor 8a and image processor 9a of the first control unit 1a on the basis of instructions from the CPU 7a. The processed image data is supplied from the RAM 12a to the liquid crystal display 21a, and the catching or other such action of the fielder character 78 is displayed as an animation on the liquid crystal display 21a.

The third game control means 59 performs a control process for calculating various data needed for the game to progress, wherein this control process does not include the display processes of the first game control means 57 and the second game control means 58. The third game control means 59 is put into effect by a function for performing, based on the first non-operation data and the second non-operation data, various game control processes that are the same as the various game control processes of the second terminal device 102. There is no time lag between the first terminal device 101 and second terminal device 102 when these devices are performing the various game control processes that do not include the various display processes of the first game control means 57 and second game control means 58.

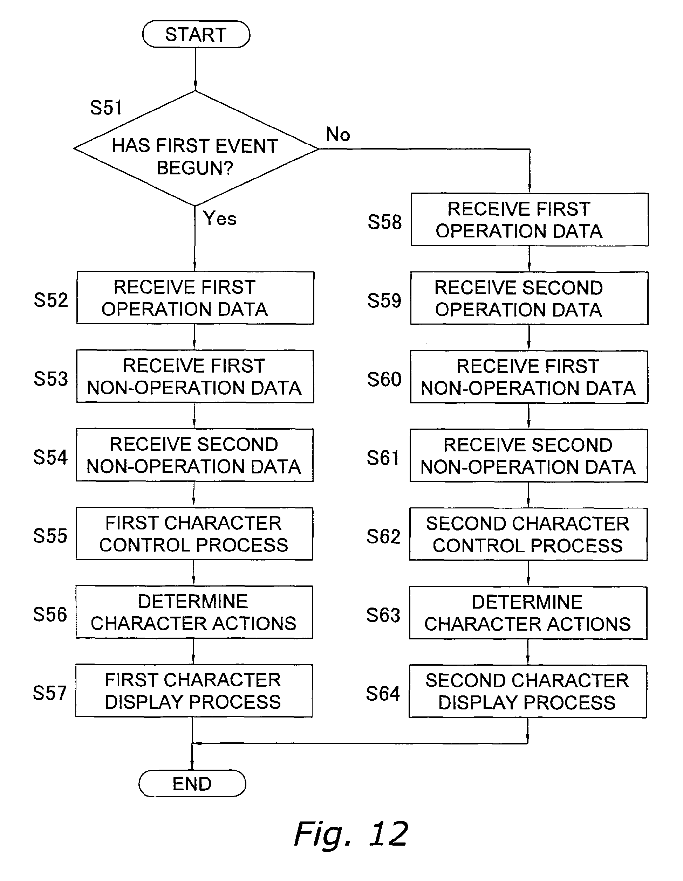

The control processes in the first game control means 57, the second game control means 58, and the third game control means 59 are described using the flowchart in FIG. 12.

The control process in the first event determining means 56 in FIG. 11 determines whether or not the first event has begun (S51).

When it is determined that the first event has begun; i.e., during the first event that occurs from the time the pitcher character 70 performs the pitching action until the time the batter character 72 performs the batting action, the first operation data receiving means 50 receives first operation data pertaining to the operation of the first operating section 5a (S52), the first non-operation data receiving means 52 receives first non-operation data that pertains to various game controls and does not include first operation data pertaining to the operation of the first operating section 5a (S53), and the second non-operation data receiving means 53 receives second non-operation data that pertains to various game controls and does not include second operation data pertaining to the operation of the second operating section 5b (S54). No process is herein performed in which the second operation data receiving means 51 receives second operation data pertaining to the operation of the second operating section 5b.

Next, a first character control process, which corresponds to the third game control means 59 and which is a game calculation process for controlling the characters, is performed based on the first operation data, the first non-operation data, and the second non-operation data (S55). When the actions of the characters are determined in the first character control process (S56), a first character display process is performed (S57), which corresponds to the first game control means 57 and which is a display process for displaying, e.g., the batting action of the batter character 72 on the first display section 3a of the first terminal device 101.

When it is determined that the first event has not begun; i.e., when the first event is not occurring, meaning that the pitcher character 70 has not yet performed the pitching action or the batter character 72 has already performed the batting action, the first operation data receiving means 50 receives first operation data pertaining to the operation of the first operating section 5a (S58), the second operation data receiving means 51 receives second operation data pertaining to the operation of the second operating section 5b (S59), the first non-operation data receiving means 52 receives first non-operation data that pertains to various game controls and does not include first operation data pertaining to the operation of the first operating section 5a (S60), and the second non-operation data receiving means 53 receives second non-operation data that pertains to various game controls and does not include second operation data pertaining to the operation of the second operating section 5b (S61).

Next, a second character control process, which corresponds to the third game control means 59 and which is a game calculation process for controlling the characters, is performed based on the first operation data, the second operation data, the first non-operation data, and the second non-operation data (S62). When the actions of the characters are determined in the second character control process (S63), a second character display process is performed (S64), which corresponds to the second game control means 58 and which is a display process for displaying, e.g., the pitch-setting action of the pitcher character 70 and the batting-setting action of the batter character 72 on the first display section 3a of the first terminal device 101.

When the first event has occurred, the display process is performed on the first display section 3a of the first terminal device 101 without second operation data having been received, after the receipt of first non-operation data and second non-operation data, which are not likely to affect display control, and also after the receipt of first operation data. The operation of the first operating section 5a is therefore immediately reflected in the first display section 3a in comparison with cases in which second operation data is received. When the operation of the first user is immediately reflected in the first display section 3a, the game can be more exciting for the first user with respect to his or her operations. When the first event has occurred, the display screen of the first display section 3a of the first terminal device 101 differs from the display screen of the second display section 3b of the second terminal device 102. However, the same first non-operation data and second non-operation data are received in the second terminal device 102 as in the first terminal device 101, for which reason the calculation process performed by the first control unit of the first terminal device 101 and the calculation process performed by the second control unit 1b of the second terminal device 102 are the same process.

When the first event has not occurred, the display process is performed in the first,display section 3a of the first terminal device 101 after both the first operation data and second operation data are received, and it is therefore possible to display the same display screen as the second display section 3b of the second terminal device 102. There is no time lag in the game calculation processes that do not include display calculation processes, because the calculation process performed by the first control unit 1a of the first terminal device 101 and the calculation process performed by the second control unit 1b of the second terminal device 102 are the same process, similar to when the first event has occurred.

The functions in the second terminal device 102 used by the second user are the same as the functions in the first terminal device 101 used by the first user, and are therefore not described in detail.

### [Outline of various processes in baseball game as an example of network game]

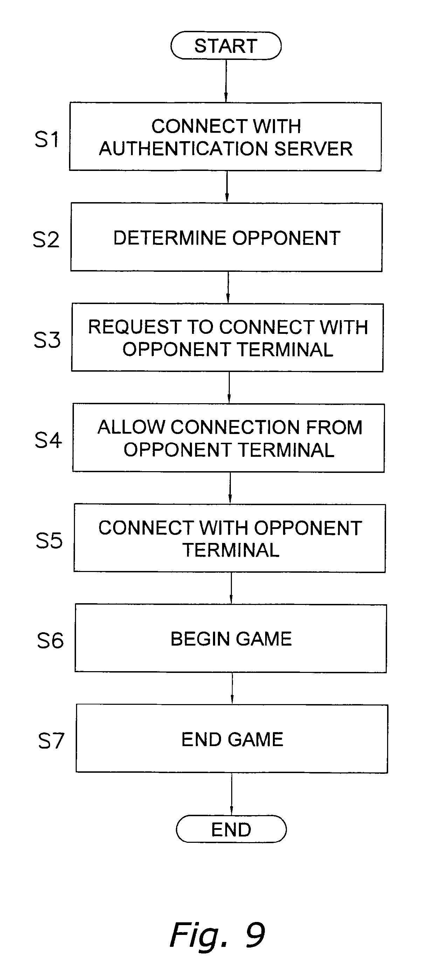

The progression sequence and the various corresponding processes in the baseball game of the present embodiment are described using the diagrams showing display images in FIGS. 4 through 8, and the flowcharts shown in FIG. 9 and in the subsequent diagrams.

First, the entire game progression control process of the network game system will be described using FIG. 9.

In the first terminal device 101 used by the first user, the network game application starts up, and network competition mode is selected in the initial screen. The first terminal device 101 is thereupon connected to the authentication server 103 through the Internet 100 via the first communication unit 6a. The users must register as members, and users are granted connection with the authentication server 103 by inputting their user names and passwords during member registration (S1). The second terminal device 102 used by the second user is also connected to the authentication server 103 through the Internet 100 via the second communication unit 6b, in the same manner as the first terminal device 101.

When the first terminal device 101 and second terminal device 102 are connected to the authentication server 103 through the Internet 100, it is possible to refer to user profile information (user names, information pertaining to the users, profile IP addresses, and the like) released on the authentication server 103. Referring to this information, the first user can select the second user from the opponent settings screen (S2), in cases in which, for example, the first user who uses the first terminal device 101 wishes to compete with the second user who uses the second terminal device 102. The authentication server 103 then sends a connection request to the second terminal device 102, transmitting a request by the first user to connect to the second user (S3). The second terminal device 102 connected to the authentication server 103 receives the connection request from the first user, and [the second user] can select to allow or deny the connection. When the second user selects to allow the connection from the first user (S4), connection-allowed information is sent from the second terminal device 102 to the first terminal device 101 via the authentication server 103, and a connection is established between the first terminal device 101 and the second terminal device 102 (S5).

When a P2P connection is established between the first terminal device 101 and the second terminal device 102, game network commands are selected and a baseball game, for example, is begun (S6), after various settings are performed in the network game application. In the network game application, the baseball game is ended (S7) when a command to end the game is selected, when a specific game time has elapsed, or when the connection between the Internet 100 and the first terminal device 101 or second terminal device 102 is severed.

The following is a description of control processes in the baseball game for game progression, specific operations, displays, and the like.

In this baseball game, a game is played wherein the second user who uses the second terminal device 102 operates the pitcher character 70, and the first user who uses the first terminal device 101 operates the batter character 72, whereby the batter character 72 hits the ball object 74 thrown by the pitcher character 70, as shown in FIGS. 4 through 6. This game also entails the second user who uses the second terminal device 102 operating a fielder character 78 to catch the ball object 74 moving across the defense field 77, as shown in FIGS. 7 and 8. The display screen shown in FIGS. 4 through 6 is referred to as a competition screen, on which the pitcher character 70, the catcher character 71, and the batter character 72 are displayed, and the display screen shown in FIGS. 7 and 8 is referred to as general screen, on which the pitcher character 70, the batter character 72, and the fielder character 78 are displayed.

In the competition screen in this baseball game, the pitcher character 70 is displayed substantially in the center of the screen, the catcher character 71 is displayed at the top of the screen, and the batter character 72 is displayed at the right side of the screen, as shown in FIG. 4. The ball object 74 is displayed in the glove of the pitcher character 70, and the display shows that the pitcher character 70 has yet to begin throwing a pitch. Six directional triangular pitch-selection objects 73 for setting pitch-type information are displayed around the pitcher character 70. A non-breaking pitch can be thrown, for example, by selecting the up direction, and a forkball can be thrown by selecting the down direction. A rectangular strike zone 76 is displayed above the home base to the side of the batter character 72. A substantially cross-shaped meet cursor 75 for setting the batting position of the bat character when the batter character 72 performs the batting action is displayed above the home base to the side of the batter character 72, and a bat swing likely to hit [the ball] can be performed by meeting the center of the substantial cross shape with the ball object 74.

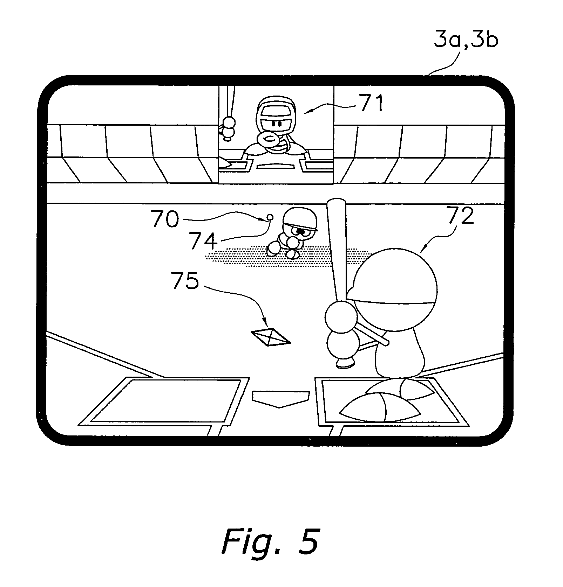

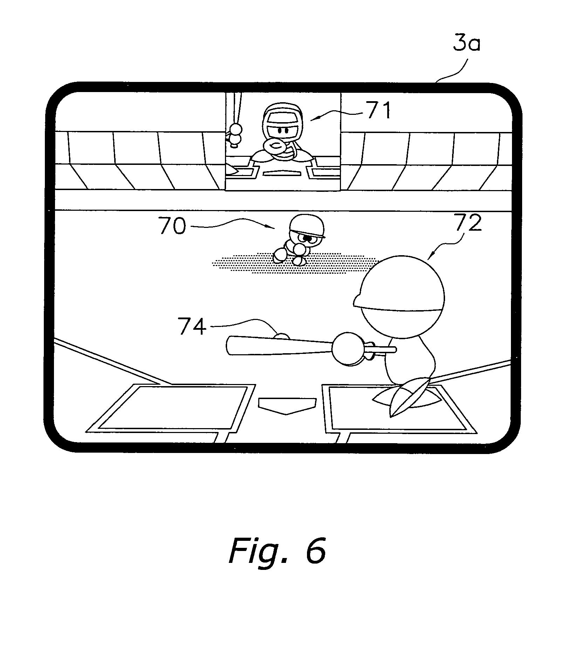

FIG. 4 is a diagram showing a display screen wherein the pitcher character 70 can set the type of pitch in the competition screen, FIG. 5 is a diagram showing a display screen wherein the batter character 72 can perform the batting action when the pitcher character 70 has performed the pitching action, and FIG. 6 is a diagram showing a display screen of the batter character 72 having performed the batting action in the competition screen. Therefore, the pitch-type selection objects 73 and the strike zone 76 are displayed in FIG. 4, wherein the pitcher character 70 sets the type of pitch, but the pitch-type selection objects 73 and strike zone 76 are not displayed in FIGS. 5 and 6. The meet cursor 75 is displayed in FIGS. 4 and 5, wherein the batter character 72 performs the batting action, but the meet cursor 75 is not displayed in FIG. 6. The shape of the ball object 74 in FIG. 5 differs depending on the trajectory of the ball. An animation is displayed such that the object is small when in proximity to the pitcher character 70, for example, and the object is large when in proximity to the batter character 72. In FIG. 6, the animation displays the batter character 72 in the act of swinging the bat character.

In the general screen in this baseball game, the defense field 77 is displayed so that the entire baseball field is visible, and the pitcher character 70 and fielder characters 78 placed at defensive positions in the defense field 77 are displayed, as shown in FIGS. 7 and 8. The bat object is displayed alone as the batter character 72 at the bottom of the display screen, and the display shows the batting operation as having already been performed. In FIG. 7, the ball object 74 is displayed as an animated image moving to the left. The animation displays the left fielder character 78 as moving towards the ball object 74 to perform a catching action.

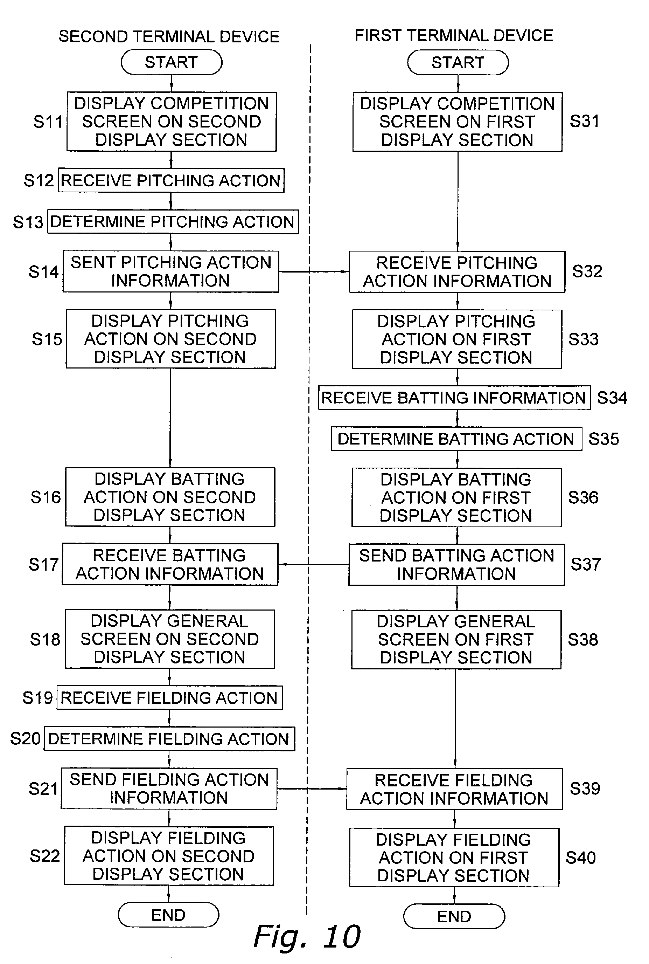

Next, the game progression control processes for displays and operations of the first terminal device 101 and second terminal device 102 in the baseball game will be described using the flowchart in FIG. 10. Particularly, an example is described herein in which pitching and defense are performed with the second terminal device 102 and batting is performed with the first terminal device 101.

First, when a baseball game is played for playing a game in which a batter character 72 hits a ball object 74 thrown by a pitcher character 70, the competition screen shown in FIG. 4 is displayed on the second display section 3b in the second terminal device 102 (S11). At this time, the same competition screen shown in FIG. 4 displayed on the second display section 3b is also displayed on the first display section 3a in the first terminal device 101 (S31).

Next, in the second terminal device 102, a pitch-type selection object 73 is selected by operating the second operating section 5b, while at the same time, the course is selected to designate the pitching direction, for example, by operating the second operating section 5b to move the meeting position of the catcher character 71. The pitch is begun by operating the second operating section 5b, e.g., by operating the S key of the keyboard 17a, whereby pitch action information is received (S12) and the pitching action is determined (S13). For example, in cases in which the up object of the pitch-type selection objects 73 is selected, the action to throw a straight pitch is determined.

In the second terminal device 102, when the pitching action is determined, pitching action information is sent from the second communication unit 6b of the second terminal device 102 (S14), and is received in the first communication unit 6a of the first terminal device 101 (S32). The competition screen shown in FIG. 5 wherein the pitching action is performed is then displayed on the second display section 3b in the second terminal device 102 (S15), and the same competition screen shown in FIG. 5 wherein the pitching action is performed as displayed on the second display section 3b is also displayed on the first display section 3a in the first terminal device 101 (S33). The displayed action of the ball object 74 is a pre-programmed movement action executed by the pitching action information determined by the operation of the second operating section 5b.

In the first terminal device 101, when the pitching action information is received, the substantially cross-shaped meet cursor 75 is moved according to the operation of the first operating section 5a and is aligned with a position that meets with the moving ball object 74. Batting action is then begun by operating the second operating section 5b, e.g., by operating the S key of the keyboard 17a, whereby batting action information is received (S34) and the batting action is determined (S35). When the batting action is determined, the competition screen shown in FIG. 6 wherein the batting action is performed is displayed on the first display section 3a in the first terminal device 101 (S36). Since the operation of the first operating section 5a is immediately reflected in the first display section 3a, the game can be made more exciting for the first user with respect to the operation.

At this time, the competition screen shown in FIG. 5 wherein the pitching action is performed is displayed on the second display section 3b in the second terminal device 102, and a pre-programmed dummy batting action is displayed, for example, regardless of the batting action information determined by the operation of the first operating section 5a (S16). Therefore, the display is different from an accurate display screen that would reflect the batting action information determined by the operation of the first operating section 5a and displayed on the first display section 3a.

Next, in the first terminal device 101, the batting action information is sent from the first communication unit 6a of the first terminal device 101 (S37) and is received in the second communication unit 6b of the second terminal device 102 (S17). The general screen shown in FIG. 7 wherein the batting action is performed is then displayed on the second display section 3b in the second terminal device 102 (S18), and the same general screen shown in FIG. 7 wherein the batting action is performed as displayed on the second display section 3b is displayed on the first display section 3a in the first terminal device 101 (S38). At this time, since the first control unit 1a of the first terminal device 101 and the second control unit 1b of the second terminal device 102 obtain the same batting action information, the same general screen shown in FIG. 7 is displayed on the first display section 3a and the second display section 3b.

When the batter character 72 swings and misses or lets the ball object 74 go by without swinging, the same competition screen is displayed on the first display section 3a and second display section 3b instead of the general screen being displayed on the first display section 3a and second display section 3b (S18, S38). The batting results (miss) or pitching results (count), for example, are displayed on this competition screen. After the batting results or pitching results are displayed, the first competition screen shown in FIG. 4 is displayed on the first display section 3a and the second display section 3b (S11, S31).

Next, in the second terminal device 102, a fielder character 78 is selected by operating the second operating section 5b, and a fielder, e.g., a left fielder character 78 is determined by operating the arrow keys and S key of the keyboard 17a, whereby fielding action information is received (S19) and fielding action is determined (S20). When the fielding action is determined, the fielding action information is sent from the second communication unit 6b of the second terminal device 102 (S21) and received in the first communication unit 6a of the first terminal device 101 (S39). The general screen shown in FIG. 8 wherein the fielding action is performed is then displayed on the second display section 3b in the second terminal device 102 (S22), and the same general screen shown in FIG. 8, wherein the fielding action is performed as displayed on the second display section 3b, is displayed on the first display section 3a in the first terminal device 101 (S40).

An example was described in which pitching and fielding were performed in the second terminal device 102 and batting was performed in the first terminal device 101. Since the game progression control processes for the displays and operations of the first terminal device 101 and second terminal device 102 are switched in cases in which batting and fielding are reversed, a case in which batting and fielding are reversed is not described.

### [Other embodiments]

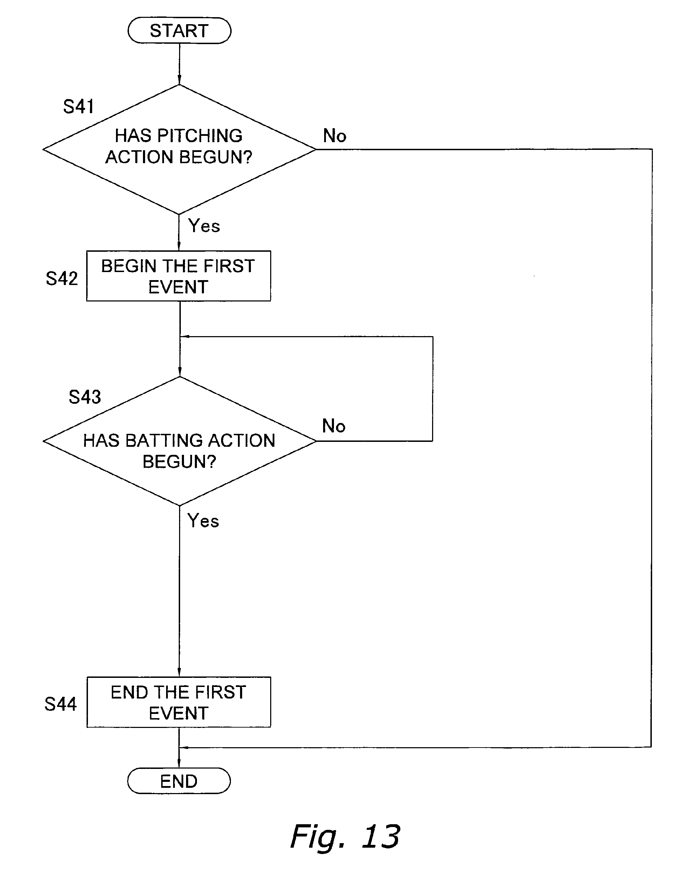

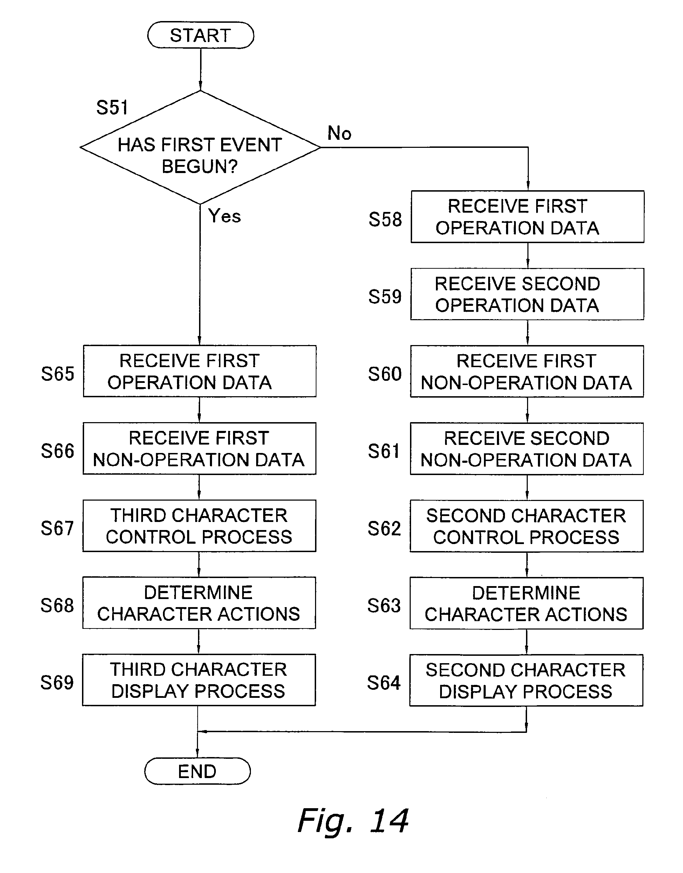

(a) The previous embodiment depicted an example of a case in which a personal computer was used as an example of a computer that can use the game program, but the game device is not limited to the previous embodiment, and a home video game device, a portable phone, a portable information terminal, and other such terminal devices can also be used as long as they are capable of running a network game.
(b) In the previous embodiment, a hard disk drive and a CD-ROM were given as examples of the recording medium, but other possible examples include a computer-readable flexible disk, semiconductor memory, a DVD, a UMD, a ROM cassette, and a cartridge for a home video game device. The means for providing the program for running the game is not limited to the previously described recording media, and a game progression program or the like can be downloaded and run directly from the home page in cases in which, for example, [programs] can be downloaded via the Internet 100 from a home page or the like provided by the company managing the network game.
(c) In the previous embodiment, a baseball game in which pre-registered members compete was used as an example of a network game, but the network game is not limited to the previous embodiment and can be applied to various games as long as users can compete with each other. For example, the network game can be similarly applied to soccer, combat sports, and various other sports games; simulation games, shooting games, role playing games, and the like.
   Specifically, the present invention can also be applied to a game wherein, in a penalty shootout in a soccer game, the member using the second terminal device 102, for example, operates a kicker character (equivalent to a kicker in an actual soccer match) in the game space, and the member using the first terminal device 101 operates a keeper character (equivalent to a keeper in an actual soccer match) in the same game space, whereby the keeper character catches a ball object (equivalent to a ball in an actual soccer match) kicked by the kicker character.
(d) In the previous embodiment, the first event determining means 56 determined that the first event had begun and ended in accordance with whether the pitching action had begun, whether the batting action had begun, or whether a specific time had elapsed, but the configuration may also be designed so that this determination is made according to whether the pitching action has begun, for example, or whether the batting action has begun, as shown in FIG. 13.
(e) In the previous embodiment, the first game control means 57 and third game control means 59 performed the first character control process and the first character display process on the basis of the first operation data, the first non-operation data, and the second non-operation data when the first event had occurred, but another option is to perform a third character control process and a third character display process on the basis of only the first operation data and the first non-operation data, as shown in FIG. 14.

When it is determined that the first event has begun; i.e., during the first event that occurs from the time the pitcher character 70 performs the pitching action until the time the batter character 72 performs the batting action, the first operation data receiving means 50 receives first operation data pertaining to the operation of the first operating section 5a (S65), and the first non-operation data receiving means 52 receives first non-operation data that pertains to various game controls and does not include first operation data pertaining to the operation of the first operating section 5a (S66). Next, on the basis of the first operation data and the first non-operation data, a third character control process is performed (S67), which corresponds to the third game control means 59 and which is a game calculation process for controlling the characters. When the actions of the characters are determined in the third character control process (S68), a third character display process is performed (S69), which corresponds to the first game control means 57 and which is a display process for displaying, e.g., the batting action of the batter character 72 on the first display section 3a of the first terminal device 101.

In this case, the display screen of the first display section 3a of the first terminal device 101 differs from the display screen of the second display section 3b of the second terminal device 102, and different processes are performed in the calculation process performed by the first control unit of the first terminal device 101 and the calculation process performed in the second control unit 1b of the second terminal device 102.

### INDUSTRIAL APPLICABILITY

According to the present invention, when a specific event has occurred in the game program, various game control processes are performed by the first game control function on the basis of the first operation data, and when a specific event has not occurred, various game control processes that differ from the first game control function are performed based on the first operation data and the second operation data. When a specific event has occurred, since the display process is performed after the first game control function receives only the first operation data, the operations of the first user are immediately reflected on the first display section, and the game can therefore be made more exciting for the user with respect to his or her operations. When the specific event has not occurred, the display process is performed in the first display section after the second game control function has received both the first operation data and the second operation data, whereby the same display screen as the second display section provided to the second terminal device can be displayed, and the game is therefore no less enjoyable for the user. Therefore, either process of the first game control function or the second game control function is performed according to whether or not the specific event has occurred, whereby the game can be made to progress smoothly without making the game any less enjoyable for the user.

## Claims

1. A game program that can run a game on a computer provided to a first terminal device that is used by a first user and is capable of communicating and competing via a network with a second terminal device used by a second user, wherein characters displayed on the first terminal device are controlled by operating a first operating section provided to the first terminal device and a second operating section provided to the second terminal device; wherein the game program runs the following on the computer:
a first operation data receiving function for receiving first operation data pertaining to the operation of the first operating section;
a first communication function for sending the first operation data to the second terminal device and for receiving second operation data pertaining to the operation of the second operating section;
a second operation data receiving function for receiving the second operation data received by the first communication function;
a first event-determining function for determining whether or not a specific event has occurred;
a first game control function for performing various game control processes on the basis of the first operation data when the first event-determining function has determined that the specific event has occurred; and
a second game control function for performing various game control processes different from the first game control function on the basis of the first operation data and the second operation data when the first event-determining function has determined that the specific event has not occurred.

2. The game program as recited in Claim 1, wherein the first game control function and the second game control function are functions for performing various display processes in a first display section provided to the first terminal device.

3. The game program as recited in Claim 2, wherein the first game control function is a function for performing a display process in which the first display section displays a display screen different from the display screen of a second display section provided to the second terminal device; and
the second game control function is a function for performing a display process in which the first display section displays the same display screen as the display screen of the second display section.

4. The game program as recited in any one claim of Claim 1 through Claim 3, for further running on a computer:
a first non-operation data receiving function for receiving first non-operation data that pertains to various game controls and does not include the first operation data;
a second communication function for sending the first non-operation data to the second terminal device and for receiving second non-operation data that pertains to various game controls and does not include the second operation data;
a second non-operation data receiving function for receiving the second non-operation data received by the second communication function; and
a third game control function for performing various game control processes identical to the various game control processes of the second terminal device, on the basis of the first non-operation data and the second non-operation data.

5. The game program as recited in Claim 4, wherein the third game control function is a function for performing various game control processes that do not include the various display processes performed in the first display section.

6. The game program as recited in any one claim of Claim 1 through Claim 5, wherein the specific event begins when either the first operating section or the second operating section performs a specific operation.

7. The game program as recited in any one claim of Claim 1 through Claim 6, wherein the specific event ends when either the first operating section or the second operating section performs a specific operation.

8. The game program as recited in any one claim of Claim 1 through Claim 6, wherein the specific event ends when a specific game time has elapsed when neither the first operating section nor the second operating section has performed a specific operation.

9. A game device, which is provided to a first terminal device that is used by a first user and is capable of communicating and competing via a network with a second terminal device used by a second user, and which can run a game wherein characters displayed on the first terminal device are controlled by operating a first operating section provided to the first terminal device and a second operating section provided to the second terminal device; said game device comprising:
a first operation data receiving means for receiving first operation data pertaining to the operation of the first operating section;
a first communication means for sending the first operation data to the second terminal device and for receiving second operation data pertaining to the operation of the second operating section;
a second operation data receiving means for receiving the second operation data received by the first communication means;
a first event-determining means for determining whether or not a specific event has occurred;
a first game control means for performing various game control processes on the basis of the first operation data when the first event-determining means has determined that the specific event has occurred; and
a second game control means for performing various game control processes different from the first game control means on the basis of the first operation data and the second operation data when the first event-determining means has determined that the specific event has not occurred.

10. A gaming method that can run a game on a computer provided to a first terminal device that is used by a first user and is capable of communicating and competing via a network with a second terminal device used by a second user, wherein characters displayed on the first terminal device are controlled by operating a first operating section provided to the first terminal device and a second operating section provided to the second terminal device; said gaming method comprising:
a first operation data receiving step for receiving first operation data pertaining to the operation of the first operating section;
a first communication step for sending the first operation data to the second terminal device and for receiving second operation data pertaining to the operation of the second operating section;
a second operation data receiving step for receiving the second operation data received by the first communication step;
a first event-determining step for determining whether or not a specific event has occurred;
a first game control step for performing various game control processes on the basis of the first operation data when the first event-determining step has determined that the specific event has occurred; and
a second game control step for performing various game control processes different from the first game control step on the basis of the first operation data and the second operation data when the first event-determining step has determined that the specific event has not occurred.
